# FASCICULE DE BREVET EUROPEEN

(11) **EP 2 719 502 B1**
(45) Date de publication et mention de la délivrance du brevet: **22.07.2015**
(21) Numéro de dépôt: 13354035.1
(22) Date de dépôt: 18.09.2013
(51) Int. Cl.: B24D 15/06, B24B 3/60, A63B 29/02, B23D 71/04

(54) **Affûteur de broches à glace**
Schärfer für Eisschrauben
Sharpener for ice screws

(30) Priorité: 09.10.2012 FR 1202696
(43) Date de publication de la demande: 16.04.2014
(73) Titulaire: Zedel, 38920 Crolles (FR)
(72) Inventeur: Maurice, Alain, F-38660 Saint Hilaire du Touvet (FR); Bonnet, Guillaume, F-38000 Grenoble (FR)
(74) Mandataire: Hecké, Gérard

(56) Documents cités:
- SU-A1- 1 703 398

## Description

### Domaine technique de l'invention

L'invention concerne un appareil affûteur destiné à affûter le trépan d'une broche à glace tubulaire (voir, par exemple SU 1 703 398 A1).

L'affûtage d'une broche à glace est très important pour assurer un vissage facile de celle-ci dans la glace. La face de coupe du trépan doit posséder une arête tranchante, et au bon angle, et l'angle de dépouille doit maintenir une pointe de dent agressive pour un bon amorçage du trépan dans la glace. Ces angles et arêtes s'émoussent avec l'usage, et la pointe des dents peut être abîmée en cas de contact avec le rocher.

### Etat de la technique

Les alpinistes ont l'habitude d'affûter manuellement leurs broches à la lime, mais il est délicat de conserver les bons angles au détriment de la performance de vissage et de maintien de la broche.

Il existe également des machines d'affûtage électriques généralement équipées de meules ou de bandes abrasives. Ces machines sont utilisées par des professionnels, par exemple pour aiguiser les carres des skis, ou des outils de coupe, comme les couteaux. De telles machines sont compliquées et coûteuses, non transportables sur le terrain, et très peu de personnes en sont équipées.

### Objet de l'invention

L'objet de l'invention consiste à réaliser un affûteur de broches à glace tubulaires, pouvant être manipulé avec facilité, et permettant de conserver les angles d'attaque du trépan et la performance de la broche.

L'affûteur selon l'invention est **caractérisé en ce qu'il** comporte :
- un support d'affûtage fixe équipé d'une lime en forme de lame allongée,
- un coulisseau de positionnement de la broche à glace selon des angles prédéterminés par rapport à la lime, ledit coulisseau étant apte à se déplacer en translation en enfourchant les deux surfaces opposées de la lime,
- et des moyens de guidage et de butée du trépan dans le coulisseau.

Un tel appareil est portatif, et à actionnement manuel, facile à manipuler par l'utilisateur, et permettant de respecter avec précision les angles de coupe et/ou de dépouille du trépan.

Selon un mode de réalisation préférentiel, les moyens de guidage et de butée comportent au moins un orifice d'introduction du fût, et un plot de maintien faisant saillie dudit orifice en étant orienté selon un angle prédéterminé. Le plot est ajusté au diamètre interne du fût pour constituer un organe de guidage et de positionnement interne de la broche.

Selon une caractéristique de l'invention, le coulisseau comporte deux orifices d'introduction du fût, lesdits orifices étant situés de part et d'autre de la lime, l'un étant prévu pour l'affûtage de la face de coupe du trépan, et l'autre pour l'affûtage de la face de dépouille.

Le coulisseau peut aussi être agencé pour assurer uniquement l'affûtage de la face de coupe du trépan, mais pas celle de la face de dépouille. Dans ce cas, le deuxième orifice du coulisseau est supprimé.

Préférentiellement, la lime s'étend dans le plan vertical médian du support entre deux extensions, et est dotée de deux surfaces latérales opposées striées venant en contact avec les dents du trépan dans un interstice du coulisseau. Le guidage en translation du coulisseau est assuré au moyen de deux rainures servant de glissières à deux nervures du support fixe.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue en perspective de l'affûteur selon l'invention ;
- la figure 2 montre l'affûteur de la figure 1, après mise en place d'une broche à glace, laquelle est positionnée pour affûter la face de coupe du trépan ;
- la figure 3 représente une vue d'une broche à glace connue en soi, et montrant le trépan avec la structure d'une dent avec sa face de coupe et sa face de dépouille ;
- les figures 4 et 5 sont des vues en élévation et de profil de la figure 2, avec les différents angles de positionnement de la broche 14 ;
- la figure 6 est une vue en coupe selon la ligne brisée 6-6 de la figure 2 ;
- la figure 7 montre l'affûteur de la figure 2, après transfert de la broche à glace dans l'autre orifice pour affûter la face de dépouille du trépan ;
- les figures 8 et 9 sont des vues en élévation et de profil de la figure 7, avec les différents angles de positionnement de la broche 14 ;
- la figure 10 est une vue en coupe selon la ligne brisée 10-10 de la figure 7.

### Description d'un mode particulier de réalisation

En référence aux figures, un affûteur 10 de broches à glace comporte un support fixe d'affûtage 11 sur lequel est montée une lime 12, et un coulisseau 13 de positionnement d'une broche 14 à glace. La lime 12 est formée par une lame rectiligne, s'étendant dans le plan vertical médian entre deux extensions 15, 16 du support fixe d'affûtage 11. Les deux surfaces opposées de la lime 12 sont striées de manière à affûter le trépan 17 de la broche 14 lors d'un déplacement en translation du coulisseau 13 le long de la lime 12.

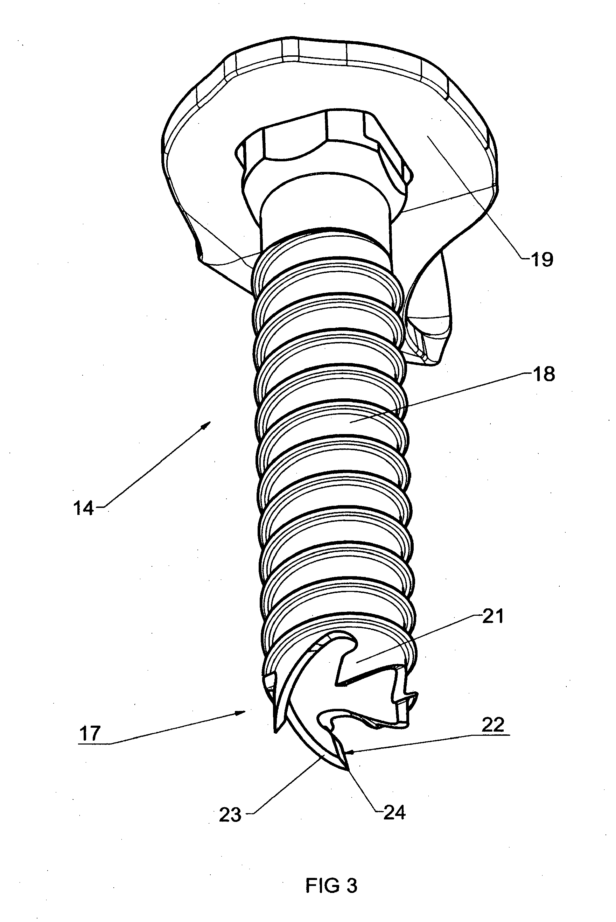

La broche 14 à glace comprend d'une manière bien connue, un fût 18 tubulaire à filetage extérieur, et une patte 19 d'entraînement en rotation du fût 18 pour le vissage dans la glace. La patte 19 est fixée à la tête 20 du fût 18, tandis que le trépan 17 se trouve à l'extrémité opposée. Le trépan 17 est creux comme le fût, et est formé par une série de dents 21 réparties angulairement à intervalles réguliers autour de l'axe longitudinal XX' du fût 18. Sur la figure 3, chaque dent 21 est dotée d'une face de coupe 22, et d'une face de dépouille 23 se rejoignant par une pointe 24. La face de coupe 22 doit être tranchante et au bon angle pour faciliter le vissage dans la glace, et l'angle de la face de dépouille 23 doit être apte à maintenir une pointe 24 agressive pour assurer un amorçage précis dans la glace.

Le coulisseau 13 comporte un interstice 25 vertical enfourchant les deux surfaces de la lime 12, et deux rainures 26, 27 horizontales servant de glissières à deux nervures 28, 29 du support 11 fixe. Les deux nervures 28, 29 sont disposées horizontalement de chaque côté de la lime 12, de manière à guider le coulisseau 13 avec précision lors de son déplacement bidirectionnel en translation entre les deux extensions 15, 16. L'épaisseur de l'interstice 25 aux extrémités opposées de coulisseau 13 est légèrement supérieure à celle de la lime 12.

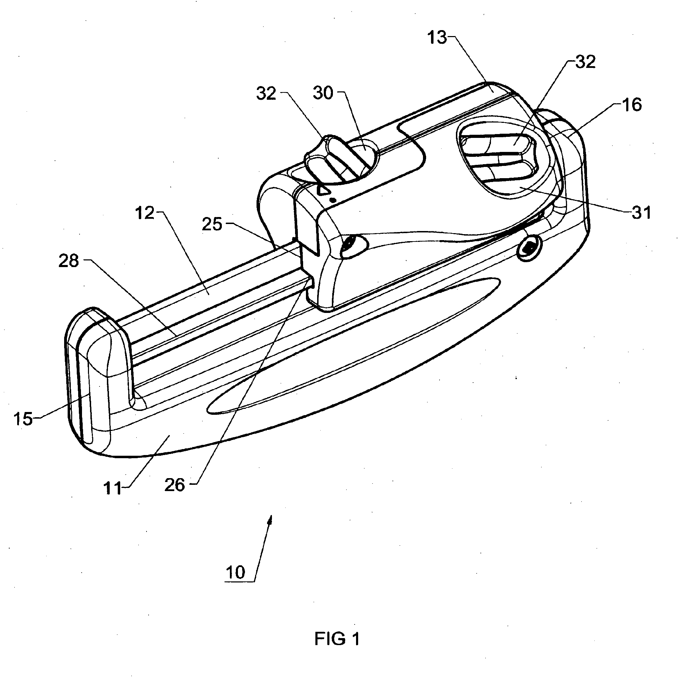

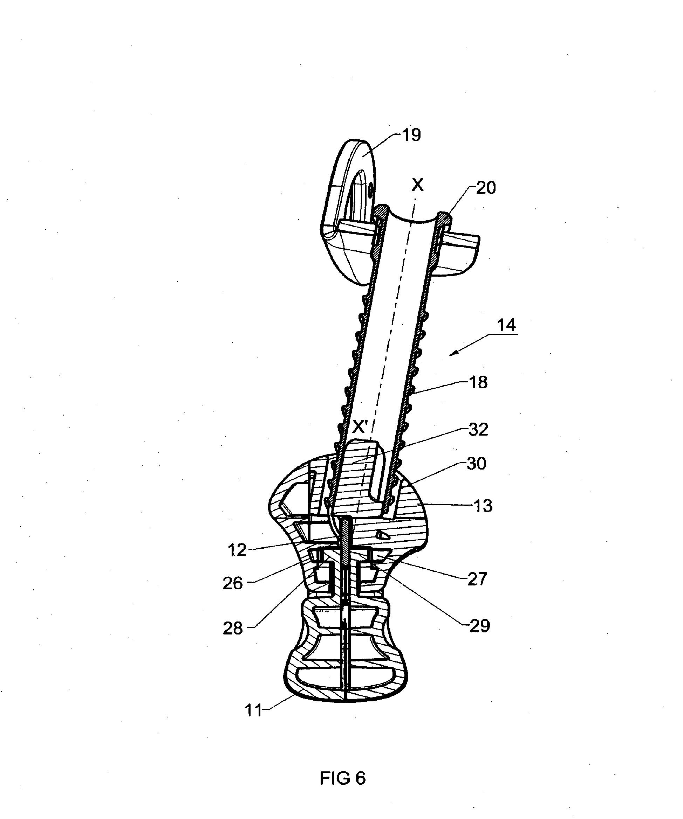

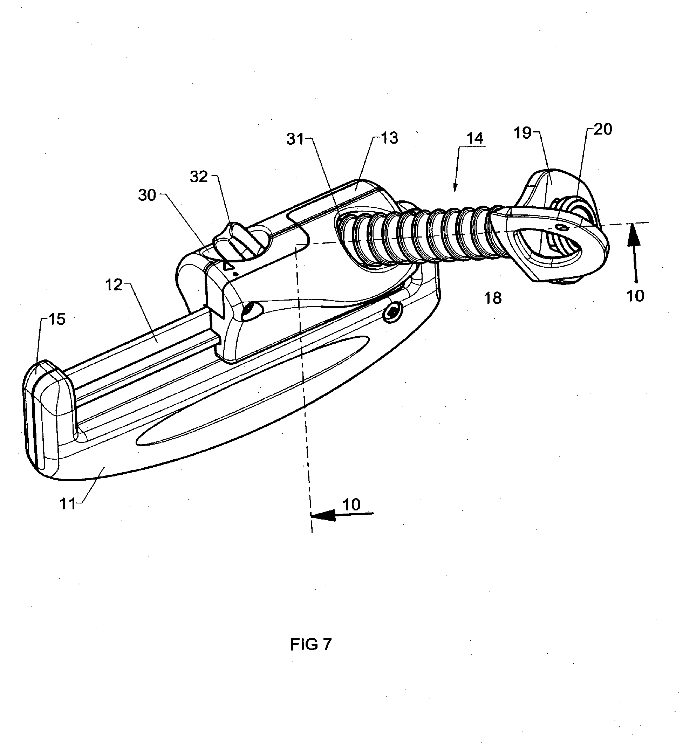

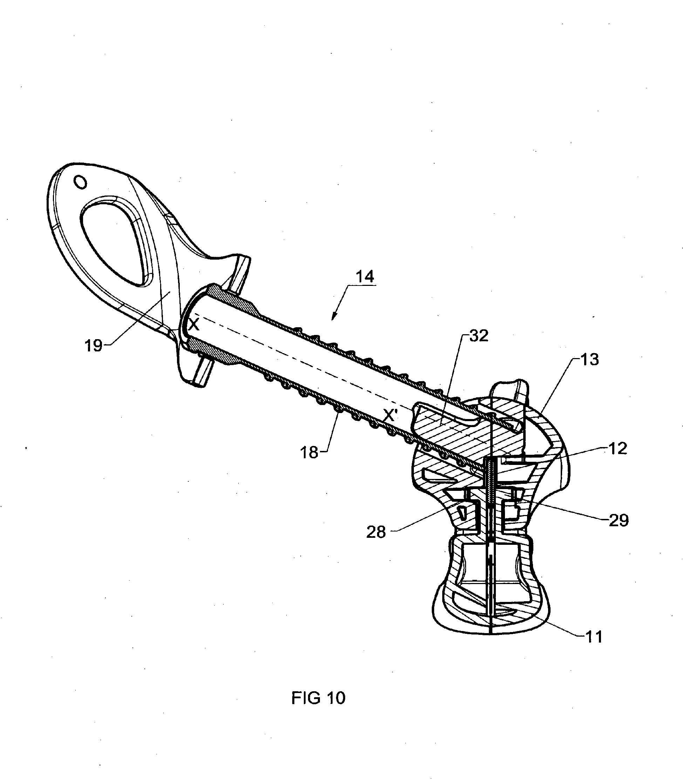

Le positionnement de la broche 14 sur le coulisseau 13 est déterminé avec précision pour assurer l'affûtage des deux faces de coupe et de dépouille 22, 23. Le coulisseau 13 est équipé à cet effet de deux orifices 30, 31 d'introduction du trépan 17 selon un angle prédéterminé. Les deux orifices 30, 31 sont situés de part et d'autre de la lime 12, et comportent chacun des moyens de guidage et de butée du trépan 17. L'orifice 30 de gauche sur les figures 1 à 6 sert à affûter la face de coupe 22 du trépan 17, tandis que l'autre orifice 31 est utilisé pour affûter la face de dépouille 23 (voir figures 7 à 10).

Les moyens de guidage et de butée du trépan 17 sont constitués à titre d'exemple par un plot 32 de maintien fixé à l'intérieur du corps du coulisseau 13, et faisant saillie de chaque orifice 30, 31. Lors de la mis en place de la broche 14 sur le coulisseau 13, le plot 32 traverse le trépan 17 creux, et une partie inférieure du fût 18 de manière à assurer un guidage par l'intérieur du tube. La hauteur du plot 32 est choisie pour garantir un positionnement précis de la broche 14 lors de l'affûtage. Le plot 32 s'ajuste au diamètre interne du fût 18, lequel est sensiblement le même pour toutes les broches à glace du commerce.

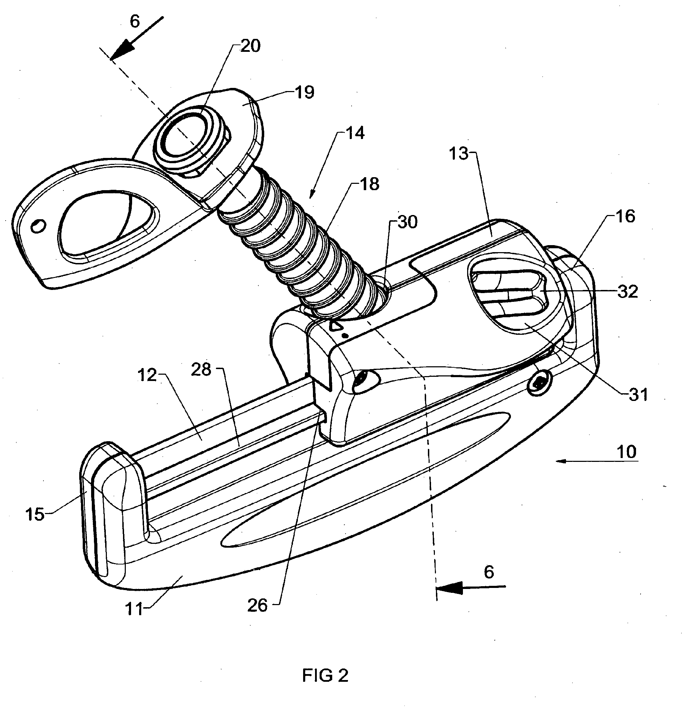

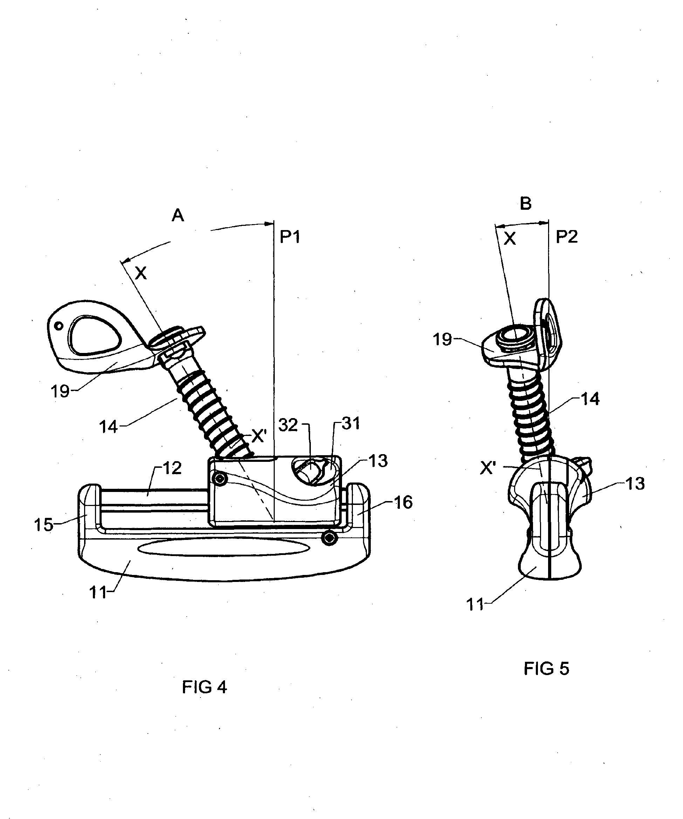

Pour l'affûtage de la face de coupe 22 illustrée sur les figures 2 à 6, la broche est introduite sur le plot 32 de l'orifice 30. L'axe XX' du fût 18 définit un angle A avec un plan P1 vertical s'étendant perpendiculairement à la lime 12 (figure 4), et un angle B avec le plan P2 de la lime 12 (figure 5). La face de coupe 22 est alors en contact avec l'une des surfaces de la lime 18. Il suffit ensuite de déplacer le coulisseau 13 en translation, tout en maintenant la broche 14 au fond de l'orifice 30.

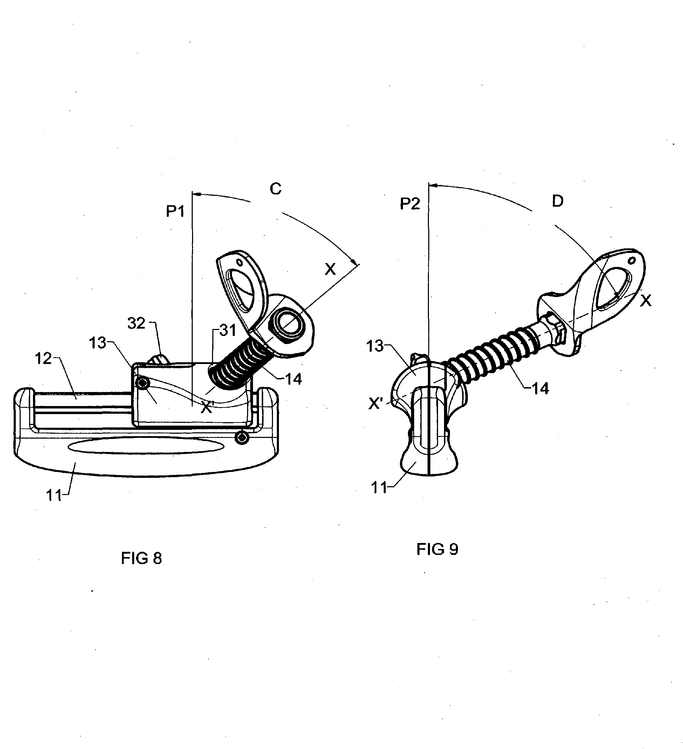

Pour l'affûtage de la face de dépouille 23 illustrée aux figures 7 à 10, la broche est introduite sur le plot 32 de l'autre orifice 31. L'axe XX' du fût 18 définit un angle C avec un plan P1 vertical s'étendant perpendiculairement à la lime 12 (figure 8), et un angle D avec le plan P2 passant par la lime 12 (figure 9). La face de dépouille 23 est alors en contact avec l'autre surface de la lime 18. Il suffit ensuite de déplacer le coulisseau 13 en translation, tout en maintenant la broche 14 au fond de l'orifice 31.

Selon une variante, le coulisseau 13 peut être agencé pour assurer l'affûtage de la face de coupe 22 du trépan 17, mais pas celle de la face de dépouille 23. Dans ce cas, le deuxième orifice 31 du coulisseau 13 est supprimé.

## Revendications

1. Affûteur pour une broche à glace à fût tubulaire et à trépan, **caractérisé en ce qu'**il comporte :
- un support d'affûtage (11) fixe équipé d'une lime (12) en forme de lame allongée,
- un coulisseau (13) de positionnement de la broche à glace (14) selon des angles prédéterminés par rapport à la lime (12), ledit coulisseau étant apte à se déplacer en translation en enfourchant les deux surfaces opposées de la lime,
- et des moyens de guidage et de butée du trépan (17) dans le coulisseau (13).

2. Affûteur selon la revendication 1, **caractérisé en ce que** les moyens de guidage et de butée comportent au moins un orifice (30, 31) d'introduction du fût (18), et un plot (32) de maintien faisant saillie dudit orifice en étant orienté selon un angle prédéterminé.

3. Affûteur selon la revendication 2, **caractérisé en ce que** le plot (32) est ajusté au diamètre interne du fût (18) pour constituer un organe de guidage et de positionnement interne de la broche.

4. Affûteur selon l'une des revendications 2 ou 3, **caractérisé en ce que** le coulisseau (13) comporte deux orifices (30, 31) d'introduction du fût (18), lesdits orifices étant situés de part et d'autre de la lime (12), l'un (30) étant prévu pour l'affûtage de la face de coupe (22) du trépan (17), et l'autre pour l'affûtage de la face de dépouille (23).

5. Affûteur selon l'une des revendications précédentes, **caractérisé en ce que** la lime (12) s'étend dans le plan vertical médian du support (11) entre deux extensions (15, 16), et est dotée de deux surfaces latérales opposées striées venant en contact avec les dents (21) du trépan (17) dans un interstice (25) du coulisseau (13).

6. Affûteur selon la revendication 5, **caractérisé en ce que** le guidage en translation du coulisseau (13) est assuré au moyen de deux rainures (26, 27) servant de glissières à deux nervures (28, 29) du support (11) fixe.

## Patentansprüche

1. Schleifgerät für eine Eisschraube mit röhrenförmigem Schaft und einem Bohrmeißel, **dadurch gekennzeichnet, dass** es umfasst:
- eine feste Halterung für das Schleifgerät (11), die mit einer Feile (12) in Form einer länglichen Klinge versehen ist,
- einen Schlitten (13) zur Positionierung der Eisschraube (14) gemäß vorbestimmten Winkeln bezogen auf die Feile (12), welcher Schlitten geeignet ist, sich in Querrichtung zu bewegen und dabei die beiden entgegengesetzten Seiten der Feile zu umgreifen,
- sowie Führungs- und Anschlagmittel des Bohrmeißels (17) im Schlitten (13).

2. Schleifgerät nach Anspruch 1, **dadurch gekennzeichnet, dass** die Führungs- und Anschlagmittel mindestens eine Öffnung (30, 31) zum Einführen des Schafts (18) sowie einen Halteklotz (32) umfassen, der aus der Öffnung heraussteht und in einem vorbestimmten Winkel ausgerichtet ist.

3. Schleifgerät nach Anspruch 2, **dadurch gekennzeichnet, dass** der Klotz (32) an den Innendurchmesser des Schafts (18) angepasst ist und so eine Führungs- und Positionierungsvorrichtung innerhalb der Eisschraube bildet.

4. Schleifgerät nach einem der Ansprüche 2 oder 3, **dadurch gekennzeichnet, dass** der Schlitten (13) zwei Öffnungen (30, 31) zum Einführen des Schafts (18) umfasst, welche Öffnungen beidseits der Feile (12) angeordnet sind, wobei die eine (30) zum Schleifen der Schnittseite (22) des Bohrmeißels (17) und die andere zum Schleifen der Schrägseite (23) vorgesehen ist.

5. Schleifgerät nach einem der vorstehenden Ansprüche, **dadurch gekennzeichnet, dass** sich die Feile (12) auf der vertikalen Mittelebene der Halterung (11) zwischen zwei Verlängerungen (15, 16) erstreckt und mit zwei entgegengesetzten, gerillten Seitenflächen versehen ist, die in einem Zwischenraum (25) des Schlittens (13) in Kontakt mit den Zacken (21) des Bohrmeißels (17) kommen.

6. Schleifgerat nach Anspruch 5, **dadurch gekennzeichnet, dass** die lineare Führung des Schlittens (13) mittels zweier Rillen (26, 27) erfolgt, die als Gleitschienen für zwei Rippen (28, 29) der festen Halterung (11) dienen.

## Claims

1. A sharpener for an ice screw with a tubular shank and a bit, **characterized in that** it comprises:
- a fixed sharpening support (11) equipped with a file (12) in the form of an elongate blade,
- a positioning slide (13) of the ice screw (14) at predefined angles with respect to the file (12), said slide being able to move in translation astride the two opposite surfaces of the file,
- and guiding and stopping means of the bit (17) in the slide (13).

2. The sharpener according to claim 1, **characterized in that** the guiding and stopping means comprise at least one opening(30, 31) for inserting the shank (18) and a securing stud (32) salient from said opening and oriented at a predefined angle.

3. The sharpener according to claim 2, **characterized in that** the stud (32) is adjusted to the internal diameter of the shank to constitute internal guiding and positioning means of the ice screw.

4. The sharpener according to claim 2 or 3, **characterized in that** the slide (13) comprises two openings (30, 31) for inserting the shank(18), said openings being situated on each side of the file (12), one (30) being designed for sharpening the cutting face (22) of the bit (17), and the other for sharpening of the flank (23).

5. The sharpener according to one of the previous claims, **characterized in that** the file (12) extends in the vertical mid-plane of the support (11) between two extensions (15, 16) and is provided with two serrated opposite lateral surfaces coming into contact with the teeth (21) of the bit (17) in a gap (25) of the slide (13).

6. The sharpener according to claim 5, **characterized in that** guiding of the slide (13) in translation is performed by means of two grooves (26, 27) acting as slide rails for two ribs (28, 29) of the fixed support. (11)
